(19) Europäisches Patentamt
European Patent Office
Office européen des brevets

(11) **EP 2 734 577 B1**

(12) **EUROPEAN PATENT SPECIFICATION**

(45) Date of publication and mention
of the grant of the patent:
**28.03.2018 Bulletin 2018/13**

(21) Application number: **12769541.9**

(22) Date of filing: **14.09.2012**

(51) Int Cl.:
*C08J 9/00* *(2006.01)*        *C08J 9/12* *(2006.01)*

(86) International application number:
**PCT/US2012/055263**

(87) International publication number:
**WO 2013/048761 (04.04.2013 Gazette 2013/14)**

(54) **POLYMERIC NANOFOAM**

POLYMERER NANOSCHAUMSTOFF

NANOMOUSSE POLYMÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2011 US 201161541309 P**

(43) Date of publication of application:
**28.05.2014 Bulletin 2014/22**

(73) Proprietor: **Dow Global Technologies LLC**
**Midland, MI 48674 (US)**

(72) Inventors:
 • **COSTEUX, Stéphane**
  **Midland, MI 48640 (US)**
 • **BUNKER, Shana P.**
  **Midland, MI 48642 (US)**
 • **JEON, Hyun K.**
  **Rosharon, TX 77583 (US)**
 • **JOG, Prasanna K.**
  **Midland, MI 48640 (US)**

(74) Representative: **Houghton, Mark Phillip et al**
**Patent Outsourcing Limited**
**1 King Street**
**Bakewell, Derbyshire DE45 1DZ (GB)**

(56) References cited:
**WO-A1-2011/112352**

## Description

This invention was made with U.S. Government support under contract DE-EE0003916 awarded by the Department of Energy. The U.S. Government has certain rights in this invention

## BACKGROUND OF THE INVENTION

### *Field of the Invention*

The present invention relates to polymeric nanofoam comprising a blend of polymers and a method for preparing such foam.

### *Description of Related Art*

Increasing energy efficiency is an ever present goal. One large use of energy is in creating and maintaining environments at a particularly desirable temperature by heating and/or cooling. Efficient use of energy while controlling temperature in an area requires minimizing thermal energy transport between the area of controlled temperature and the environment surrounding that area. Therefore, thermal insulating materials are commonly used to isolate temperature controlled areas from other areas that may be either at a different temperature. Thermally insulating materials are commonplace in building structures and appliances such as refrigerators and freezers for instance.

Polymeric foam has long been used as a thermal insulating material. Historically, typical thermally insulating polymeric foam comprises a plurality of cells having dimensions of 100 micrometer or greater and require presence of gas having low thermal conductivity in the foam cells. While these polymeric foams serve well as thermally insulating materials, there is opportunity to improve the thermally insulating properties of polymeric foam without resorting to low thermal conductivity gases. One characteristic of polymeric foam that controls thermal conductivity through the foam is the cell size. Behavior of gas molecules in foam cells can contribute to thermal conductivity through the polymer foam if the gas molecules are free to move within the cells and collide with the cell walls. The contribution of cell gas to thermal conductivity through polymeric foam decreases dramatically when the cell size of the foam is reduced below one micrometer. For example, thermal conductivity due to cell gas reduces almost in half upon reducing a foam cell size from one micrometer to 300 nanometers (nm) and reduces by almost 2/3 upon reducing the cell size from one micrometer to below 100 nm. Therefore, polymeric foam having a nanoporous structure (*that is*, having an average cell size that is below one micron; "nanofoam"), especially polymeric foam having an average cell size of 300 nm or less, and most preferably 100 nm or less is desirable as thermal insulation.

It is further desirable for thermally insulating polymeric foam to have a high void volume. Generally, thermal conductivity is high through the polymer network of a polymeric foam structure than is the thermal conductivity through the cell gas. Therefore, maximizing the amount void space due to cells in foam will generally result in a decrease in thermal conductivity through the foam. This is particularly challenging for polymeric foam having a nanoporous structure. One way to characterize void volume is by "porosity", which is the ratio of void volume to foam volume. Porosity values of 0.50 or greater are desirable for thermally insulating foam.

Cost is also a concern for thermal insulation. It is desirable to prepare polymeric foam using relatively low-cost polymers such as styrenic polymers as opposed to higher cost polymers such as (meth)acrylic polymers. Moreover, it is desirable to reduce cost and complexity by avoiding inclusion of nanofillers as nucleators.

WO 2011/112352 discloses a polymeric foam article comprising a copolymer of methyl methacrylate and ethyl acrylate, and styrene acrylontrile.

## BRIEF SUMMARY OF THE INVENTION

The present invention offers an advancement in polymeric nanofoam technology by providing a polymeric foam that simultaneously provides a solution to the aforementioned desires and challenges. The present invention provides a nanofoam having a porosity of 0.50 or greater in a polymer foam containing styrenic polymer without requiring nanofillers. Surprisingly, the present invention is a result of discovering that including a certain amount of a polymer containing copolymerized acrylonitrile along with a (meth)acrylic polymer allows formation of polymeric nanofoam that is highly porous. Even more surprisingly, the presence of the copolymerized acrylonitrile allows formation of a highly porous polymeric nanofoam that contains a minor amount (less than 50 weight-percent) of (meth)acrylic copolymer. It is further surprising that a polymeric nanofoam having a narrow cell size distribution (ratio of volume average diameter to number average diameter below 2.5) and a cell density greater than $10^{14}$ cells per cubic centimeter can be made from a single polymer phase comprising a miscible mixture of acrylonitrile copolymer and (meth)acrylic polymer.

In a first aspect, the present invention is a polymeric nanofoam comprising a continuous polymer phase defining a plurality of cells wherein the polymeric foam is characterized by: (a) the continuous polymer phase comprises at least one (meth)acrylic-free acrylonitrile-containing copolymer selected from styrene-acrylonitrile copolymers and acrylonitrile-butadiene-styrene copolymers; (b) the continuous polymer phase comprises at least one (meth)acrylic polymer selected from poly(methylmethacrylate), poly(ethylmethacrylate), and copolymers of methyl methacrylate and/or ethyl methacrylate with polar monomers and/or non-polar monomers, wherein the concentration of (meth)acrylic polymer is in a range of 5-90 weight-percent of total continuous polymer phase weight yet the amount of methacrylic copolymer is 50 wt% or less of the total continuous polymer phase weight; (c) a porosity of at least 50% of the total foam volume; (d) an absence of nano-sized nucleating additive; and (e) at least one of the following: (i) the cells have a number-average cell size of 500 nanometers or less; and (ii) an effective nucleation site density of at least $1 \times 10^{14}$ sites per cubic centimeter of prefoamed material; wherein the total weight of copolymerized acrylonitrile is in a range of 3 to 28 weight-percent based on total continuous polymer phase weight and at least one (meth)acrylic-free acrylonitrile-containing copolymer has a higher glass transition temperature than all of the (meth)acrylic polymers.

In a second aspect, the present invention is a method for preparing the polymeric nanofoam of the first aspect, the method comprising: (a) melt-blending together at least one (meth)acrylic-free acrylonitrile-containing copolymer selected from styrene-acrylonitrile copolymers and acrylonitrile-butadiene-styrene copolymers and at least one (meth)acrylic polymer selected from poly(methylmethacrylate), poly(ethylmethacrylate), and copolymers of methyl methacrylate and/or ethyl methacrylate with polar monomers and/or non-polar monomers, to form a continuous polymer phase; (b) contacting the continuous polymer phase with a blowing agent comprising at least 50 weight-percent carbon dioxide based on total blowing agent weight at a pressure of at least 15 MegaPascals to form a foamable polymer mixture; (c) reducing the pressure on the foamable polymer mixture by at least 10 MegaPascals at a rate of at least 10 MegaPascals per second while the foamable polymer mixture is at a temperature at least 20 degrees Celsius below the glass transition temperature of the (meth)acrylic-free acrylonitrile-containing copolymer having the highest glass transition temperature to allow the foamable polymer mixture to expand into the polymeric foam of the first aspect; wherein the amount of copolymerized acrylonitrile in the continuous polymer phase is in a range of 3 to 28 weight-percent based on total continuous polymer phase weight, the sum of (meth)acrylic polymers accounts for 5-90 weight-percent of the total continuous polymer phase weight, the amount of methacrylic copolymer is 50 weight-percent or less of the total continuous polymer phase weight, at least one (meth)acrylic-free acrylonitrile-containing copolymer has a higher glass transition temperature than all of the (meth)acrylic polymers and the foamable polymer mixture is free of nano-sized nucleating additive.

The process of the present invention is useful for preparing the polymeric foam of the present invention. The polymeric foam of the present invention is useful as a thermally insulating article.

DETAILED DESCRIPTION OF THE INVENTION

Test methods refer to the most recent test method as of the priority date of this document when a date is not indicated with the test method number. References to test methods contain both a reference to the testing society and the test method number. The following test method abbreviations and identifiers apply herein: ASTM refers to American Society for Testing and Materials; EN refers to European Norm; DIN refers to Deutsches Institut für Normung; and ISO refers to International Organization for Standards.

"Multiple" means two or more. "And/or" means "and, or as an alternative". All ranges include endpoints unless otherwise indicated.

"Polymer", unless indicated otherwise, refers to both homopolymer and copolymer. Unless otherwise indicated, "copolymer" includes block copolymer, graft copolymer, alternating copolymer and random copolymer.

"(meth)acrylic" refers to both "methacrylic" and "acrylic". Hence, a "(meth)acrylic" polymer is a polymer selected from methacrylic polymers and acrylic polymers. "Methacrylic" polymers contain polymerized methacrylic monomers. "Acrylic" polymers contain polymerized acrylic monomers. A "(meth)acrylic" polymer can be a copolymer containing both methacrylic monomers and acrylic monomers and as such can be both a methacrylic polymer and an acrylic polymer. If a copolymer is "(meth)acrylic-free" that means the copolymer lacks both methacrylic and acrylic monomer units copolymerized therein.

Polymeric foam comprises a continuous polymer phase that defines a plurality of cells therein. The continuous polymer phase consists of all the polymers in the polymeric foam. The continuous polymer phase forms a continuous matrix of a polymeric foam that defines the voids, or cells, of the foam. The continuous polymer phase can have non-polymer components such as fillers or additives mixed within it such that the combination of continuous polymer phase and non-polymer components makes up the continuous matrix of the foam, but the non-polymer components are not considered part of the continuous polymer phase. The polymeric foam, however, is free of nano-sized nucleating additives. Nano-sized nucleating additives have at least two, preferably three, orthogonal dimensions that are less than 30 nanometers.

The continuous polymer phase comprises at least one (meth)acrylic-free acrylonitrile-containing copolymer selected from styrene-acrylonitrile (SAN) copolymers and acrylonitrile-butadiene-styrene (ABS) copolymers. The (meth)acrylic-free acrylonitrile-containing copolymer desirably contains 4 weight-percent (wt%) or more, preferably 5 wt% or more and can contain 8 wt% or more, 10 wt% or more and even 15 wt% or more copolymerized acrylonitrile (AN) monomers. At the same time, the (meth)acrylic-free acrylonitrile-containing copolymer desirably contains 40 wt% or less copolymerized acrylonitrile (AN) monomers

The continuous polymer phase comprises at least one (meth)acrylic polymer. The (meth)acrylic polymer can be a homopolymer or copolymer. The (meth)acrylic polymer can contain acrylonitrile or be free of acrylonitrile. For example, the continuous polymer phase can be a blend of at least one (meth)acrylic-free acrylonitrile copolymer and at least one acrylonitrile-containing (meth)acrylic polymer. The continuous polymer phase can be a blend of at least one (meth)acrylic-free acrylonitrile copolymer and at least one acrylonitrile-free (meth)acrylic polymer. The continuous polymer phase can be a blend of at least one (meth)acrylic-free acrylonitrile copolymer and only acrylonitrile-free (meth)acrylic polymers.

The (meth)acrylic polymer is selected from poly(methylmethacrylate) (PMMA); poly(ethylmethacrylate); copolymers of methyl methacrylate and/or ethylmethacrylate with polar monomers and/or non-polar monomers. Suitable polar monomers include one or more selected from a group consisting of methyl acrylates, ethyl acrylates, butyl acrylates, butyl methacrylates, acrylic acid, vinyl acetate, acrylonitrile, vinyl diaminotriazine, ethylene oxide and acryl amide. Suitable non-polar monomers include one or more selected from styrene, isoprene, butadiene, monomers containing dimethyl siloxane and monomers containing fluorine.

The concentration of (meth)acrylic polymer in the continuous polymer phase is in a range of 5 weight-percent (wt%) or more, desirably 10 wt% or more, preferably 20 wt% or more, more preferably 30 wt% or more and at the same time 90 wt% or less, preferably 80 wt% or less, still more preferably 70 wt% or less and can be 60 wt% or less and even 50 wt% or less based on total continuous polymer phase weight. Additionally, the total amount of methacrylic copolymer in the continuous polymer phase is 50 wt% or less based on the total continuous polymer phase weight.

In one desirable embodiment, the (meth)acrylic-free acrylonitrile-containing copolymer is selected from styrene-acrylonitrile copolymers and acrylonitrile-butadiene-styrene copolymers and the (meth)acrylic polymer is selected from methyl methacrylate/ethyl acrylate copolymers and ethylmethacrylate homopolymer.

The total amount of copolymerized acrylonitrile monomer in the polymers of the continuous polymer phase is 3 wt% or more, preferably 4 wt% or more, yet more preferably 5 wt% or more, still more preferably 7 wt% or more and at the same time is 28 wt% or less, preferably 25 wt% or less, still more preferably 20 wt% or less and can be 17 wt% or less based on the total weight of continuous polymer phase. When the concentration of copolymerized acrylonitrile monomer is below 3 wt% based on total continuous polymer phase weight polymer foam properties tend to suffer when using the present polymer blend. Copolymers containing more than 28 wt% copolymerized acrylonitrile monomer are difficult to make and difficult to process in a foam manufacturing process .

Determine the amount of AN in a continuous polymer phase or acrylonitrile-containing copolymer by the following nuclear magnetic resonance (NMR) method. Dissolve a known mass ($W_{SAMPLE}$) of continuous polymer phase or acrylonitrile-containing polymer ("Sample") and a known mass ($W_{std}$) of pyrazine reference standard into a deuterated chloroform solvent to prepare an NMR sample. Collect a quantitative $^{13}$C NMR spectrum on the NMR sample. The spectrum will have a peak at 119 ppm corresponding to AN and a peak at 145 ppm corresponding to the pyrazine reference standard. Integrate the area under the 119 ppm peak to get an intensity for the AN component ($I_{AN}$) in the Sample and the 145 ppm peak to get an intensity for the reference standard component ($I_{std}$). Determine the absolute mass of AN ($W_{AN}$) in the Sample using the following equation:

$$W_{AN} = [W_{std}] \ x \ \left[ \frac{(I_{std})(M_0^{AN})}{(0.25)(I_{std})(M_0^{std})} \right]$$

Where $M_0^{AN}$ is the molecular weight for AN and $M_0^{std}$ is the molecular weight for the pyrazine reference standard. Determine the wt% of AN in the Sample using the following equation:

$$Wt\% \ AN = \left[ \frac{W_{AN}}{W_{SAMPLE}} \right] \ x \ 100\%$$

At least one (meth)acrylic-free acrylonitrile-containing copolymer has a glass transition temperature (Tg) that is equal to or higher than the Tg of all of the (meth)acrylic polymers in the continuous polymer phase in order to achieve a polymeric foam having a high nucleation density ($10^{14}/cm^3$ or more) and a uniform cell structure. Herein, reference to the Tg of a polymer refers to the Tg for the polymer in neat form. Determine Tg for a polymer by differential scanning calorimetry (DSC) according the method of ASTM E1356-03.

Desirably, the continuous polymer phase is a single phase polymer mixture. A single phase polymer mixture has a single Tg and forms a transparent polymer film. Determine Tg for the continuous polymer phase according to the DSC method of ASTM E1356-03. If the continuous polymer phase comprises only miscible polymers then the test method will reveal a single Tg for the continuous polymer phase. If multiple Tg values are evident in the DSC curve then there are two or more immiscible polymers and the continuous polymer phase is not a single phase polymer mixture. Evaluate transparency by compression molding a one (1) millimeter thick film of the continuous polymer phase and then assessing transparency according to ASTM method D1003. A transmittance value according ASTM method D1003 that is greater than 75% indicates the film is "transparent".

The polymeric foam has a porosity of at least 50% of the total foam volume. Porosity can be expressed as either a fraction or a percentage. Determine porosity of foam by first identifying the density ($\rho$) of material in the foam (that is, the continuous polymer phase in combination with any non-polymeric additives) and the density of the foam article ($\rho_f$). Determine $\rho_f$ according to ASTM method D-1622-03. Then determine the fractional porosity of the foam ($p$) using the following equation:

$$p = [1-(\rho_f)/(\rho)]$$

Determine the porosity as a percentage of the total foam volume from the fractional porosity using the following equation:

$$p\% = p \times 100\%.$$

The polymeric foam is further characterized as having either a number-average cell size of 500 nanometers or less or an effective nucleation site density of at least $1 \times 10^{14}$ sites per cubic centimeter of prefoamed material. Desirably, the polymeric foam possesses both of these characteristics.

Determine number-average cell size of a polymeric foam by: (a) preparing a cross section of a polymeric foam by cryo-fracturing the foam; (b) examining by scanning electron microscopy (SEM) a representative portion of the cross section that dimensions between two microns by two microns in dimensions and ten microns by ten microns in dimensions; (c) measuring the cell size of 50-200 random cells in the portion of the cross section; and (d) determining the average of all measured sizes and using that average value as the number average cell size (Dn) for the polymeric foam using the following formula:

$$\mathrm{Dn} = \sum_{i=1}^{N} Di/N$$

where N is the number of cells measured and Di is the size of cell number i. The cell size for a round cell is equal to the diameter of the cell. The cell size of a non-round cell is equal to the average of the longest and shortest chord extending through the centroid of the cell's planar cross section that is visible in the SEM image.

Cell sizes can also be characterized by a volume average cell size (Dv) as determined using the following equation:

$$\mathrm{Dv} = [\sum_{i=1}^{N} D_i^4]/[\sum_{i=1}^{N} D_i^3]$$

The ratio of Dv to Dn is also valuable as an indication of the breadth of the cell size distribution.

Desirably, the polymeric foam has a number-average cell size of 500 nanometers or less, preferably 300 nanometers or less, more preferably 250 nanometers or less, still more preferably 200 nanometers or less and yet more preferably 100 nanometers or less. Additionally, the polymeric foam can have a ratio of volume-average cell size to number-average cell size that is less than 2.5, preferably 2.0 or less, still more preferably 1.7 or less and most preferably 1.5 or less.

The effective nucleation site density of a polymeric foam is equivalent to the number of nucleation sites that develop into a unique cell in the final foam. To be clear, cells that independently nucleate but that coalesce into a single cell correspond to a single effective nucleation site. Cells that nucleate, but collapse and disappear prior to formation of the final foam do not count as effective nucleation sites. Preferred embodiments of the thermoplastic polymeric foam article have an effective nucleation site density of $1 \times 10^{14}$ or more, preferably $1 \times 10^{15}$ or more, still more preferably $1 \times 10^{16}$ or more and can be $1 \times 10^{17}$ or more. Typically, the effective nucleation site density is less than about $1 \times 10^{19}$ in

order to achieve porosity percentage greater than 50%.

Determine the effective nucleation site density (No) for a polymeric foam article from the porosity ($p$) of the polymeric foam article, the number average cell size in nanometers ($Dn$), the density of the polymeric foam article ($\rho_f$) and density of non-void material in the foam article (p), both in grams per cubic centimeter (g/cm$^3$). Start by calculating the average cell volume ($V_{cell}$) using:

$$V_{cell} = \frac{\pi(Dn)^3/6}{10^{21}}$$

Determine the average number of cells per cubic centimeter of foam ($N_c$) using:

$$N_c = \frac{p}{V_{cell}} = \left[ 10^{21} \frac{1-(\rho_f/\rho_p)}{\pi(Dn)^3/6} \right]$$

Determine the effective nucleation density ($N_0$) using:

$$N_0 = \frac{N_c}{1-p} = \left[ 10^{21} \frac{(\rho_p/\rho_f)-1}{\pi(Dn)^3/6} \right]$$

The polymeric foam can contain additives (polymeric or non-polymeric) in the continuous polymer phase. Suitable additives include infrared attenuating agents (*for example,* carbon black, graphite, metal flake, titanium dioxide or other metal oxides); clays such as natural absorbent clays (*for example,* kaolinite and montmorillonite) and synthetic clays; fillers (*for example,* talc and magnesium silicate); flame retardants (*for example,* brominated flame retardants such as hexabromocyclododecane and brominated polymers, phosphorous flame retardants such as triphenylphosphate, and flame retardant packages that may including synergists such as, for example, dicumyl and polycumyl); lubricants (*for example,* calcium stearate and barium stearate); acid scavengers (*for example,* magnesium oxide and tetrasodium pyrophosphate), pigments and blowing agent stabilizer (*for example,* non-plasticizing polyalkylene-oxide polymers and copolymers including polyethylene glycol (PEG), PEG ethers, polyethylene oxide grafted polystyrene/maleic anhydride (PS/MAH) random copolymers, and ethylene glycol grafted polyurethane random copolymers; non-plasticizing polydimethylsiloxane (PDMS) and non-plasticizing functionalized PDMS including hydroxyl and amine functionalized PDMS; and PS/MAH random copolymers. A blowing agent stabilizer is "non-plasticizing" if it does not significantly lower a polymer composition's glass transition temperature (Tg) when dispersed in the polymer composition at a concentration suitable for use in this invention.

The process of the present invention is a method for preparing the polymeric foam of the present invention. The process can be a batch process, a semi-continuous process (for example, an extrusion line that extrudes foamable polymer composition into a mold where it expands into a foam) or a continuous extrusion foam process that produces a continuous length of polymeric foam.

Melt-blend together at least one (meth)acrylic-free acrylonitrile-containing copolymer and at least one (meth)acrylic polymer to form a continuous polymer phase. The (meth)acrylic-free acrylonitrile-containing copolymer, (meth)acrylic polymer and continuous polymer phase are as described previously for the polymeric foam. Desirably, the continuous polymer phase is a single phase polymer mixture. Melt-blending of the polymers together can occur in any known method. The melt-blending can occur in an extruder as part of a continuous extrusion foam process, for example.

Contact the continuous polymer phase with a blowing agent to form a foamable polymer mixture. The blowing agent comprises carbon dioxide in either a liquid or a supercritical state. The blowing agent is desirably 50 weight-percent (wt%) or more and 100 wt% or less carbon dioxide based on total weight of blowing agent. Additional blowing agents, if present, can be selected from any blowing agent commonly used for preparing polymeric foam. Suitable additional blowing agents include any one or combination of more than one of the following: inorganic gases such as argon, nitrogen and air; organic blowing agents such as water, aliphatic and cyclic hydrocarbons having from one to nine carbons including methane, ethane, n-propane, iso-propane, n-butane, iso-butane, n-pentane, iso-pentane, neo-pentane, cyclobutane and cyclopentane; fully and partially halogenated alkanes and alkenes having from one to five carbons, preferably that are chlorine-free (*e.g.,* difluoromethane (HFC-32), perfluoromethane, ethyl fluoride (HFC-161), 1,1,-difluoroethane (HFC-152a), 1,1,1-trifluoroethane (HFC-143a), 1,1,2,2-tetrafluoroethane (HFC-134), 1,1,1,2 tetrafluoroethane (HFC-134a), pentafluoroethane (HFC-125), perfluoroethane, 2,2-difluoropropane (HFC-272fb), 1,1,1-trifluoropropane (HFC-263fb), 1,1,1,2,3,3,3-heptafluoropropane (HFC-227ea), 1,1,1,3,3-pentafluoropropane (HFC-245fa), and 1,1,1,3,3-pentafluorobutane (HFC-365mfc)); aliphatic alcohols having from one to five carbons such as methanol, ethanol, n-propanol, and isopropanol; carbonyl containing compounds such as acetone, 2-butanone, and acetaldehyde; ether containing compounds such as dimethyl ether, diethyl ether, methyl ethyl ether; carboxylate compounds such as methyl formate, methyl acetate, ethyl acetate; carboxylic acid and chemical blowing agents such as azodicarbonamide, azodiisobutyronitrile, benzenesulfo-hydrazide, 4,4-oxybenzene sulfonyl semi-carbazide, p-toluene sulfonyl semi-carbazide, barium azodicarboxylate, N,N'-dimethyl-N,N'-dinitrosoterephthalamide, trihydrazino triazine and sodium bicarbonate.

The blowing agent concentration is preferably 18 wt% or more, more preferably 20 wt% or more and still more preferably 24 wt% or more and at the same time desirably 60 wt% or less, typically 55 wt% or less and can be 50 wt% or less relative to the continuous polymer phase weight.

Contact the continuous polymer phase with the blowing agent at a pressure of at least 15 MegaPascals (MPa) to form the foamable polymer mixture. The continuous polymer phase can be in molten form or solid form when contacted with blowing agent. Notably, the continuous polymer phase refers to the polymers forming the continuous polymer phase in the final foam and does not necessarily imply that the continuous polymer phase is a single, continuous material throughout the entire process. For example, when contacting blowing agent with the continuous polymer phase to form a foamable polymer composition, the continuous polymer phase can a single piece or multiple pieces.

Desirably, the continuous polymer phase is molten and experiencing mixing when contacted with blowing agent so as to facilitate rapid dispersion of the blowing agent into the continuous polymer phase. Desirably, all of the blowing agent imbibes into the continuous polymer phase in forming the foamable polymer mixture.

The continuous polymer phase can be in a solid form, as is often the case in batch foam processes. For example, a single piece or multiple pieces of the continuous polymer phase can be placed into a vessel and then the vessel sealed and pressurized with blowing agent to a sufficient pressure that causes blowing agent to imbibe into the continuous polymer phase thereby forming a foamable polymer mixture. The blowing agent will typically plasticize the continuous polymer phase and expand the plasticized continuous polymer phase into a polymeric foam when the pressure on the vessel is suddenly released.

The concentration of carbon dioxide in the foamable polymer mixture is typically 10 wt% or more, preferably 20 wt% or more and more preferably 25 wt% or more while at the same time desirably 50 wt% or less, preferably 45 wt% or less and most preferably 40 wt% or less based on total foamable polymer mixture weight.

Reduce the pressure on the foamable polymer mixture by at least 10 MPa at a rate of at least 10 MPa per second while the foamable polymer mixture is at a temperature at least 20 degrees Celsius (°C) below the Tg of the (meth)acrylic-free acrylonitrile-containing copolymer having the highest Tg in the foamable polymer mixture. Upon reducing the pressure allow the foamable polymer mixture to expand into a polymeric nanofoam of the present invention. How quickly pressure is reduced on the foamable polymer mixture can influence the effective nucleation site density. To achieve optimal effective nucleation site density the pressure drop should occur at a rate of at least 10 MPa per second (MPa/s) or greater, preferably 50 MPa/s or greater, more preferably 100 MPa/s or greater, still more preferably 200 MPa/s or greater and most preferably 500 MPa/s or greater. At the same time, the pressure drop rate is generally 100 GigaPascal per second (GPa/s) or lower, preferably 15 GPa/s or lower, more typically 10 GPa/s or lower and yet more typically 3 GPa/s or lower.

*Examples*

The following examples serve to illustrate embodiments of the present invention. Prepare a continuous polymer phase composition for each example by batch mixing in a Haake blender at 180°C and 60 revolutions per minute mixing speed for ten minutes. Compression mold the continuous polymer phase composition into a plaque having a thickness of 1.5 millimeters. Cut the plaque into pieces having a width of four millimeters and a length of 20 millimeters for use in the foaming process.

Prepare polymeric foam articles by a batch foaming process using a high pressure stainless steel vessel fitted with a pressure release valve and connected to a source of pressurized carbon dioxide. The internal volume of the vessel is 30 milliliters. Insert a sufficient number of pieces of the continuous polymer phase into the vessel so as to fill 0.1% to 5% of the internal volume of the vessel. Pressurize the vessel with carbon dioxide to a Soak Pressure and condition to a Soak Temperature and allow the vessel to remain at the Soak Pressure and Soak Temperature for a Soak Time, as described in the following table:

| Example | Soak Time (hours) | Soak Temp (°C) | Soak Pressure (MPa) |
| --- | --- | --- | --- |
| 1-7 | 10 | 33 | 30 |

(continued)

| Example | Soak Time (hours) | Soak Temp (°C) | Soak Pressure (MPa) |
|---------|-------------------|----------------|---------------------|
| 8 | 11.25 | 30 | 33 |
| 9-20 | 10 | 30 | 33 |

After the Soak Time is complete, suddenly release the pressure in the vessel using the pressure release valve to allow the vessel to reach atmospheric pressure (approximately 0.1 MPa) at a rate of at least 300 MPa/s. Inside the vessel, the foamable polymer composition expands into to a polymeric foam. The resulting foam is immediately submerged into a water bath at 60°C for three minutes. Characterize the resulting foam as described previously. The polymers used in the examples are as follows:

| Abbreviation | Polymer | Characteristics |
|--------------|---------|-----------------|
| ABS 9030 | Acrylonitrile-butadiene-styrene copolymer | Copolymer with 24.4 wt% AN and 19 wt% rubber phase relative to total copolymer weight; Tg = 112.6°C |
| Optix™ 41 (Optix is a trademark of Plaskolite, Inc.) | Copolymer of methyl methacrylate and ethyl acrylate | 12 wt% ethyl acrylate (based on total polymer weight); Tg = 90.7°C; MFR= 26 dg/10min). Commercially available from Plaskolite, Inc. |
| Optix™ 68 | Copolymer of methylmethacrylate and ethyl acrylate | 5.6 wt% ethyl acrylate (based on total polymer weight); Tg = 105.7°C; MFR= 8 dg/10min. Commercially available from Plaskolite, Inc. |
| Optix™ 75 | Copolymer of methylmethacrylate and ethyl acrylate | 0.4 wt% ethyl acrylate (based on total polymer weight); Tg = 117.8°C; MFR=3.2 dg/10 minutes. Commercially available from Plaskolite, Inc. |
| PEMA-350k | Polyethylmethac rylate homopolymer | Mw = 350 kg/mol; Tg = 76.6°C. |
| PS | Polystyrene homopolymer | Mw= 168,000 g/mol; Tg of 100°C. (e.g., PS 168 from The Dow Chemical Company) |
| SAN-8 | Styrene-acrylonitrile copolymer | 7.8 wt% AN Mw =142 kg/mol; Mw/Mn = 2.25; Tg= 105.4°C. |
| SAN-12 | Styrene-acrylonitrile copolymer | 12 wt% AN Mw =124 kg/mol; Mw/Mn = 2.2; Tg= 104.7°C. |
| SAN-28 | Styrene-acrylonitrile copolymer | 28wt% AN Mw = 86.8 kg/mol; Mw/Mn = 1.87; Tg=104.7°C |
| SAN-32 | Styrene-acrylonitrile copolymer | 32.2wt% AN Mw = 96.4 kg/mol, Mw/Mn = 2.11; Tg=107.6°C |
| SAN-40 | Styrene-acrylonitrile copolymer | 40wt% AN Mw=85 kg/mol Tg=112.9°C |
| SAN-900 | Styrene-acrylonitrile copolymer | 15.6wt% AN Mw = 115 kg/mol, Mw/Mn = 2.25; Tg=106.1°C |
| SAN-901 | Styrene-acrylonitrile copolymer | 15.2wt% AN Mw = 146 kg/mol Mw/Mn = 2.13; Tg=105.4°C |

(continued)

| Abbreviation | Polymer | Characteristics |
|---|---|---|
| VM100 | Copolymer of methyl methacrylate and ethyl acrylate. | 8.9 wt% ethyl acrylate. MFR = 10 dg/min; Tg = 95.3 °C; Supplied by Arkema, |
| (Mw = weight average molecular weight; Mn = number average molecular weight; Tg = glass transition temperature; and MFR= melt flow rate (tested at 3.8 kilograms/230°C according to ASTM D1238)) | | |

*Examples 1-8: Styrene-Acrylonitrile (SAN) and Polyethylmethacrylate (PEMA)*

Examples 1-8 illustrate foam where the continuous polymer phase is a combination of styrene acrylonitrile copolymer and a methacrylic homopolymer. Table 1 presents the characteristics of the continuous polymer phase and resulting foams:

Table 1

| Ex | Continuous Polymer Phase | | | | Foam Characteristics | | | | |
|---|---|---|---|---|---|---|---|---|---|
| | Polymer 1 (wt%) | Polymer 2 (wt%) | Wt% AN | Tg[1] (°C) | Foam Density (g/cm$^3$) | Porosity (%) | Effective Nucleation Site Density (cm$^{-3}$) | Dn (nm) | Dv/Dn |
| 1 | SAN-28 (30) | PEMA-350k (70) | 8.4 | 86 | 0.21 | 81 | $1.1 \times 10^{14}$ | 423 | 1.13 |
| 2 | SAN-28 (40) | PEMA-350k (60) | 11.2 | 90 | 0.24 | 78 | $2.2 \times 10^{14}$ | 317 | 1.26 |
| 3 | SAN-8 (50) | PEMA-350k (50) | 4 | 90 | 0.32 | 70 | $1.0 \times 10^{15}$ | 165 | 1.23 |
| 4 | SAN-901 (50) | PEMA-350k (50) | 8 | 94 | 0.45 | 59 | $3.1 \times 10^{15}$ | 96 | 1.27 |
| 5 | SAN-900 (50) | PEMA-350k (50) | 8 | 94 | 0.43 | 61 | $3.4 \times 10^{15}$ | 95 | 1.38 |
| 6 | SAN 32 (50) | PEMA-350k (50) | 16 | 77/107 | 0.29 | 74 | $1.3 \times 10^{14}$ | 357 | 1.41 |
| 7 | SAN-28 (50) | PEMA -350k (50) | 14 | 93 | 0.27 | 75 | $4.3 \times 10^{14}$ | 321 | 1.44 |
| 8 | SAN-8 (60) | PEMA-350k (40) | 4.8 | 96 | 0.35 | 68 | $2.9 \times 10^{15}$ | 113 | 1.20 |
| [1] A continuous polymer phase with a single Tg corresponds to a homogeneous blend and only one Tg is evident. When the blend is not homogeneous two Tg values are evident and reported. | | | | | | | | | |

*Examples 9-20: Styrene-Acrylonitrile (SAN) or Acrylonitrile-Butadiene-Styrene (ABS) and Methacrylic Copolymer*

Examples 9-20 illustrate foam where the continuous polymer phase is a combination of either SAN or ABS copolymer and a methacrylic copolymer. Table 2 presents the characteristics of the continuous polymer phase and resulting foams:

Table 2

| Ex | Continuous Polymer Phase | | | | Foam Characteristics | | | | |
|---|---|---|---|---|---|---|---|---|---|
| | Polymer 1 (wt%) | Polymer 2 (wt%) | Wt% AN | Tg [1] (°C) | Foam Density (g/cm$^3$) | Porosity (%) | Effective Nucleation Site Density (cm$^{-3}$) | Dn (nm) | Dv/Dn |
| 9 | SAN-28 (50) | Optix 68 (50) | 14 | 104 | 0.42 | 62 | $4.0 \times 10^{15}$ | 92 | 1.16 |
| 10 | SAN-28 (50) | VM100 (50) | 14 | 98 | 0.45 | 60 | $2.5 \times 10^{15}$ | 130 | 1.21 |
| 11 | SAN-28 (50) | Optix 41 (50) | 14 | 101 | 0.21 | 82 | $6.9 \times 10^{14}$ | 233 | 1.43 |
| 12 | SAN-8 (50) | VM100 (50) | 4 | 102 | 0.45 | 60 | $3.9 \times 10^{15}$ | 90 | 1.19 |
| 13 | SAN-12 (50) | VM100 (50) | 6 | 102 | 0.46 | 58 | $4.8 \times 10^{15}$ | 82 | 1.17 |
| 14 | SAN-900 (50) | VM100 (50) | 8 | 102 | 0.34 | 69 | $4.0 \times 10^{15}$ | 103 | 1.18 |
| 15 | SAN-28 (60) | VM100 (40) | 16.8 | 102 | 0.44 | 61 | $3.1 \times 10^{15}$ | 99 | 1.16 |
| 16 | SAN-28 (70) | VM100 (30) | 19.6 | 103 | 0.38 | 66 | $4.9 \times 10^{15}$ | 91 | 1.18 |
| 17 | SAN-28 (80) | VM100 (20) | 22.4 | 106 | 0.44 | 60 | $4.5 \times 10^{15}$ | 86 | 1.26 |
| 18 | SAN-28 (90) | VM100 (10) | 25.2 | 106 | 0.32 | 71 | $5.0 \times 10^{14}$ | 210 | 1.49 |
| 19 | ABS 9030 (50) | VM100 (50) | 12.2 | 97 / 111 | 0.28 | 78 | $3.0 \times 10^{14}$ | 285 | 1.49 |
| 20 | SAN-40 (70) | VM100 | 28 | 110 | 0.54 | 52 | $2.1 \times 10^{14}$ | 214 | 3.73 |

[1] A continuous polymer phase with a single Tg corresponds to a homogeneous blend and only one Tg is evident. When the blend is not homogeneous two Tg values are evident and reported.

*Comparative Example A - Methacrylic Copolymer with higher Tg than AN Copolymer*

For Comparative Example (CE) A prepare a foam in like manner as Examples 1-20 except using the polymer blend indicated in Table 3. The polymer blend for Comparative Example A includes a methacrylate copolymer that has a higher Tg than the (meth)acrylates-free AN containing polymer. CE A has a large number of large cells.

Table 3

| Ex | Continuous Polymer Phase | | | | Foam Characteristics | | | | |
|---|---|---|---|---|---|---|---|---|---|
| | Polymer 1 (wt%) | Polymer 2 (wt%) | Wt% AN | Tg (°C) | Foam Density (g/cm$^3$) | Porosity (%) | Effective Nucleation Site Density (cm$^{-3}$) | Dn (nm) | Dv/Dn |
| CE A | SAN-28 (50) | Optix 75 (50) | 14 | 112 | 0.30 | 73 | $3.7 \times 10^{14}$ (based only on small cells) | 240+ large cells (>3 microns) | 7.67 |

*Comparative Examples B-C - Need for AN but less than 28 wt%*

Prepare Comparative Examples B-D prepare foam in like manner as in Examples 1-20 except use the polymer blends indicated in Table 4. These polymer blends do not contain any acrylonitrile and illustrate that without acrylonitrile foams end up with either large cells or low porosity.

Table 4

| Ex | Continuous Polymer Phase | | | | Foam Characteristics | | | | |
|---|---|---|---|---|---|---|---|---|---|
| | Polymer 1 (wt%) | Polymer 2 (wt%) | Wt% AN | Tg[1] (°C) | Foam Density (g/cm$^3$) | Porosity (%) | Effective Nucleation Site Density (cm$^{-3}$) | Dn (nm) | Dv/Dn |
| CE B | PS (50) | PEMA-350k (50) | 0 | 77/98 | 0.41 | 62.5 | $7.5 \times 10^{11}$ | 1620 | 8.43 |
| CE C | PS (70) | PEMA-350k (30) | 0 | 77/105 | 31 | 31 | about $10^{12}$ | about 500 | about 4.3 |
| [1] A continuous polymer phase with a single Tg corresponds to a homogeneous blend and only one Tg is evident. When the blend is not homogeneous two Tg values are evident and reported. | | | | | | | | | |

*Comparative Examples D - Need for (meth)acrylic polymer*

Prepare Comparative Example D in like manner as in Examples 1-12 except use the polymer indicated in Table 5. The polymer does not contain any (meth)acrylic polymer, only SAN. As a result, the resulting foam has very large cell sizes and a low effective nucleation site density.

Table 5

| Ex | Continuous Polymer Phase | | | | Foam Characteristics | | | | |
|---|---|---|---|---|---|---|---|---|---|
| | Polymer 1 (wt%) | Polymer 2 (wt%) | Wt% AN | Tg (°C) | Foam Density (g/cm$^3$) | Porosity (%) | Effective Nucleation Site Density (cm$^{-3}$) | Dn (nm) | Dv/Dn |
| CE E | SAN-28 (100) | -- | 28 | 104 | 0.33 | 70 | $1\times10^{12}$ | 1589 | 2.60 |

**Claims**

1. A polymeric nanofoam comprising a continuous polymer phase defining a plurality of cells wherein the polymeric foam is **characterized by**:

   a. the continuous polymer phase comprises at least one (meth)acrylic-free acrylonitrile-containing copolymer selected from styrene-acrylonitrile copolymers and acrylonitrile-butadiene-styrene copolymers;
   b. the continuous polymer phase comprises at least one (meth)acrylic polymer selected from poly(methylmethacrylate), poly(ethylmethacrylate), and copolymers of methyl methacrylate and/or ethyl methacrylate with polar monomers and/or non-polar monomers, wherein the concentration of (meth)acrylic polymer is in a range of 5-90 weight-percent of total continuous polymer phase weight yet the amount of methacrylic copolymer is 50 wt% or less of the total continuous polymer phase weight;
   c. a porosity of at least 50% of the total foam volume;
   d. an absence of nano-sized nucleating additive; and
   e. at least one of the following:

      i. the cells have a number-average cell size of 500 nanometers or less; and
      ii. an effective nucleation site density of at least $1\times10^{14}$ sites per cubic centimeter of prefoamed material;

wherein the total weight of copolymerized acrylonitrile is in a range of 3 to 28 weight-percent based on total continuous polymer phase weight and at least one (meth)acrylic-free acrylonitrile-containing copolymer has a higher glass transition temperature than all of the (meth)acrylic polymers.

2. The polymeric nanofoam of Claim 1, wherein the continuous polymer phase is a single phase polymer mixture.

3. The polymeric nanofoam of Claim 1, wherein the continuous polymer phase consists of at least one acrylonitrile-containing copolymer and at least one acrylonitrile-free (meth)acrylic polymer.

4. The polymeric nanofoam of claim 1, wherein the (meth)acrylic-free acrylonitrile-containing copolymer is a styrene-acrylonitrile copolymer.

5. The polymeric nanofoam of Claim 1, wherein the (meth)acrylic-free acrylonitrile-containing copolymer is selected from styrene-acrylonitrile copolymers and acrylonitrile-butadiene-styrene copolymers and the (meth)acrylic polymer is selected from methyl methacrylate/ethyl acrylate copolymers and ethylmethacrylate homopolymer.

6. The polymeric nanofoam of Claim 1, wherein the plurality of cells have a number-average cell size of 300 nanometers or less.

7. The polymeric nanofoam of Claim 1, wherein the effective nucleation site density is at least $10^{15}$ sites per cubic centimeter of prefoamed material.

8. The polymeric nanofoam of Claim 1, wherein the cells have a ratio of volume-average cell size to number-average cell size that is less than 2.5.

9. A method for preparing the polymeric nanofoam of Claim 1, the method comprising:

a. melt-blending together at least one (meth)acrylic-free acrylonitrile-containing copolymer selected from styrene-acrylonitrile copolymers and acrylonitrile-butadiene-styrene copolymers and at least one (meth)acrylic polymer selected from poly(methylmethacrylate), poly(ethylmethacrylate), and copolymers of methyl methacrylate and/or ethyl methacrylate with polar monomers and/or non-polar monomers, to form a continuous polymer phase;

b. contacting the continuous polymer phase with a blowing agent comprising at least 50 weight-percent carbon dioxide based on total blowing agent weight at a pressure of at least 15 MegaPascals to form a foamable polymer mixture;

c. reducing the pressure on the foamable polymer mixture by at least 10 MegaPascals at a rate of at least 10 MegaPascals per second while the foamable polymer mixture is at a temperature at least 20 degrees Celsius below the glass transition temperature of the (meth)acrylic-free acrylonitrile-containing copolymer having the highest glass transition temperature to allow the foamable polymer mixture to expand into the polymeric foam of Claim 1;

wherein the amount of copolymerized acrylonitrile in the continuous polymer phase is in a range of 3 to 28 weight-percent based on total continuous polymer phase weight, the sum of (meth)acrylic polymers accounts for 10-90 weight-percent of the total continuous polymer phase weight, the amount of methacrylic copolymer is 50 weight-percent or less of the total continuous polymer phase weight, at least one (meth)acrylic-free acrylonitrile-containing copolymer has a higher glass transition temperature than all of the (meth)acrylic polymers and the foamable polymer mixture is free of nano-sized nucleating additive.

10. The process of Claim 9, wherein the continuous polymer phase is a single phase polymer mixture.

11. The process of Claim 9, wherein the foamable polymer mixture contains at least 10 weight-percent carbon dioxide relative to total foamable polymer mixture weight.

12. The process of Claim 9, wherein the rate of pressure drop in step (c) is in a range of 100 MegaPascals per second to three GigaPascals per second.

**Patentansprüche**

1. Ein polymerer Nanoschaumstoff, der eine kontinuierliche Polymerphase beinhaltet, die eine Vielzahl von Zellen definiert, wobei der polymere Schaumstoff durch Folgendes gekennzeichnet ist:

   a. die kontinuierliche Polymerphase beinhaltet mindestens ein (meth)acrylfreies Acrylnitril enthaltendes Copolymer, ausgewählt aus Styrol-Acrylnitril-Copolymeren und Acrylnitril-Butadien-Styrol-Copolymeren;
   b. die kontinuierliche Polymerphase beinhaltet mindestens ein (Meth)acryl-Polymer, ausgewählt aus Poly(methylmethacrylat), Poly(ethylmethacrylat) und Copolymeren aus Methylmethacrylat und/oder Ethylmethacrylat mit polaren Monomeren und/oder nicht-polaren Monomeren, wobei die Konzentration von (Meth)acryl-Polymer in einem Bereich von 5-90 Gewichtsprozent des Gesamtgewichts der kontinuierlichen Polymerphase liegt, die Menge des Methacryl-Copolymers jedoch 50 Gew.-% oder weniger des Gesamtgewichts der kontinuierlichen Polymerphase beträgt;
   c. eine Porosität von mindestens 50 % des Gesamtschaumstoffvolumens;
   d. eine Abwesenheit von keimbildendem Additiv in Nano-Größe; und
   e. mindestens eines der Folgenden::

      i. die Zellen weisen eine zahlengemittelte Zellgröße von 500 Nanometern oder weniger auf; und
      ii. eine wirksame Keimbildungsstellendichte von mindestens $1 \times 10^{14}$ Stellen pro Kubikzentimeter vorgeschäumten Materials;

   wobei das Gesamtgewicht copolymerisierten Acrylnitrils, bezogen auf das Gesamtgewicht der kontinuierlichen Polymerphase, in einem Bereich von 3 bis 28 Gewichtsprozent liegt und mindestens ein (meth)acrylfreies Acrylnitril enthaltendes Copolymer eine höhere Glasübergangstemperatur als all die (Meth)acryl-Polymere aufweist.

2. Polymerer Nanoschaumstoff gemäß Anspruch 1, wobei die kontinuierliche Polymerphase eine einphasige Polymermischung ist.

3. Polymerer Nanoschaumstoff gemäß Anspruch 1, wobei die kontinuierliche Polymerphase aus mindestens einem Acrylnitril enthaltenden Copolymer und mindestens einem acrylnitrilfreiem (Meth)acryl-Polymer besteht.

4. Polymerer Nanoschaumstoff gemäß Anspruch 1, wobei das (meth)acrylfreie Acrylnitril enthaltende Copolymer ein Styrol-Acrylnitril-Copolymer ist.

5. Polymerer Nanoschaumstoff gemäß Anspruch 1, wobei das (meth)acrylfreie Acrylnitril enthaltende Copolymer ausgewählt ist aus Styrol-Acrylnitril-Copolymeren und Acrylnitril-Butadien-Styrol-Copolymeren und das (Meth)acryl-Polymer ausgewählt ist aus Methylmethacrylat-/Ethylacrylat-Copolymeren und Ethylmethacrylat-Homopolymer.

6. Polymerer Nanoschaumstoff gemäß Anspruch 1, wobei die Vielzahl von Zellen eine zahlengemittelte Zellgröße von 300 Nanometern oder weniger aufweist.

7. Polymerer Nanoschaumstoff gemäß Anspruch 1, wobei die wirksame Keimbildungsstellendichte mindestens $10^{15}$ Stellen pro Kubikzentimeter vorgeschäumten Materials beträgt.

8. Polymerer Nanoschaumstoff gemäß Anspruch 1, wobei die Zellen ein Verhältnis von volumengemittelter Zellgröße zu zahlengemittelter Zellgröße aufweisen, das kleiner als 2,5 ist.

9. Ein Verfahren zum Herstellen des polymeren Nanoschaumstoffs gemäß Anspruch 1, wobei das Verfahren Folgendes beinhaltet:

   a. Zusammenmischen durch Schmelzen mindestens eines (meth)acrylfreien Acrylnitril enthaltenden Copolymers, ausgewählt aus Styrol-Acrylnitril-Copolymeren und Acrylnitril-Butadien-Styrol-Copolymeren und mindestens eines (Meth)acryl-Polymers, ausgewählt aus Poly(methylmethacrylat), Poly(ethylmethacrylat) und Copolymeren aus Methylmethacrylat und/oder Ethylmethacrylat mit polaren Monomeren und/oder nicht-polaren Monomeren, um eine kontinuierliche Polymerphase zu bilden;
   b. In-Kontakt-Bringen der kontinuierlichen Polymerphase mit einem Treibmittel, das, bezogen auf das Gesamtgewicht des Treibmittels, mindestens 50 Gewichtsprozent Kohlendioxid bei einem Druck von mindestens 15 Megapascal beinhaltet, um eine schäumbare Polymermischung zu bilden;

c. Reduzieren des Drucks auf die schäumbare Polymermischung um mindestens 10 Megapascal bei einer Geschwindigkeit von mindestens 10 Megapascal pro Sekunde, während sich die schäumbare Polymermischung bei einer Temperatur mindestens 20 Grad Celsius unter der Glasübergangstemperatur des (meth)acrylfreien Acrylnitril enthaltenden Copolymers mit der höchsten Glasübergangstemperatur befindet, um der schäumbaren Polymermischung das Ausdehnen in den Polymerschaumstoff gemäß Anspruch 1 zu ermöglichen;

wobei die Menge an copolymerisiertem Acrylnitril in der kontinuierlichen Polymerphase, bezogen auf das Gesamtgewicht der kontinuierlichen Polymerphase, in einem Bereich von 3 bis 28 Gewichtsprozent liegt, die Summe an (Meth)acryl-Polymeren 10-90 Gewichtsprozent des Gesamtgewichts der kontinuierlichen Polymerphase ausmacht, die Menge an Methacryl-Copolymer 50 Gewichtsprozent oder weniger des Gesamtgewichts der kontinuierlichen Polymerphase ausmacht, mindestens ein (meth)acrylfreies Acrylnitril enthaltendes Copolymer eine höhere Glasübergangstemperatur als all die (Meth)acryl-Polymere aufweist und die schäumbare Polymermischung frei von keimbildendem Additiv in Nano-Größe ist.

**10.** Prozess gemäß Anspruch 9, wobei die kontinuierliche Polymerphase eine einphasige Polymermischung ist.

**11.** Prozess gemäß Anspruch 9, wobei die schäumbare Polymermischung relativ zu dem Gesamtgewicht der schäumbaren Polymermischung mindestens 10 Gewichtsprozent Kohlendioxid enthält.

**12.** Prozess gemäß Anspruch 9, wobei die Geschwindigkeit des Druckabfalls in Schritt (c) in einem Bereich von 100 Megapascal pro Sekunde bis drei Gigapascal pro Sekunde liegt.

**Revendications**

**1.** Une nanomousse polymère comprenant une phase polymère continue définissant une pluralité d'alvéoles, la mousse polymère étant **caractérisée par** :

a. **le fait que** la phase polymère continue comprend au moins un copolymère contenant de l'acrylonitrile dépourvu de (méth)acrylique sélectionné parmi des copolymères de styrène-acrylonitrile et des copolymères d'acrylonitrile-butadiène-styrène ;
b. **le fait que** la phase polymère continue comprend au moins un polymère (méth)acrylique sélectionné parmi le poly(méthacrylate de méthyle), le poly(méthacrylate d'éthyle), et des copolymères de méthacrylate de méthyle et/ou méthacrylate d'éthyle avec des monomères polaires et/ou des monomères non polaires, dans laquelle la concentration du polymère (méth)acrylique est comprise dans une gamme de 5 à 90 pour cent en poids du poids total de phase polymère continue bien que la quantité de copolymère méthacrylique soit de 50 % en poids ou moins du poids total de phase polymère continue ;
c. une porosité d'au moins 50 % du volume total de mousse ;
d. une absence d'additif nucléant nanométrique ; et
e. au moins l'un de ce qui suit :

i. les alvéoles ont une taille d'alvéoles moyenne en nombre de 500 nanomètres ou moins ; et
ii. une densité de sites de nucléation efficaces d'au moins $1 \times 10^{14}$ sites par centimètre cube de matériau pré-expansé ;

dans laquelle le poids total d'acrylonitrile copolymérisé est compris dans une gamme de 3 à 28 pour cent en poids rapporté au poids total de phase polymère continue et au moins un copolymère contenant de l'acrylonitrile dépourvu de (méth)acrylique a une température de transition vitreuse plus élevée que la totalité des polymères (méth)acryliques.

**2.** La nanomousse polymère de la revendication 1, dans laquelle la phase polymère continue est un mélange polymère monophasé.

**3.** La nanomousse polymère de la revendication 1, dans laquelle la phase polymère continue consiste en au moins un copolymère contenant de l'acrylonitrile et au moins un polymère (méth)acrylique dépourvu d'acrylonitrile.

**4.** La nanomousse polymère de la revendication 1, dans laquelle le copolymère contenant de l'acrylonitrile dépourvu de (méth)acrylique est un copolymère de styrène-acrylonitrile.

5. La nanomousse polymère de la revendication 1, dans laquelle le copolymère contenant de l'acrylonitrile dépourvu de (méth)acrylique est sélectionné parmi des copolymères de styrène-acrylonitrile et des copolymères d'acrylonitrile-butadiène-styrène et le polymère (méth)acrylique est sélectionné parmi des copolymères de méthacrylate de méthyle/acrylate d'éthyle et l'homopolymère de méthacrylate d'éthyle.

6. La nanomousse polymère de la revendication 1, dans laquelle la pluralité d'alvéoles a une taille d'alvéoles moyenne en nombre de 300 nanomètres ou moins.

7. La nanomousse polymère de la revendication 1, dans laquelle la densité de sites de nucléation efficaces est d'au moins $10^{15}$ sites par centimètre cube de matériau pré-expansé.

8. La nanomousse polymère de la revendication 1, dans laquelle les alvéoles ont un rapport taille d'alvéoles moyenne en volume à taille d'alvéoles moyenne en nombre qui est inférieur à 2,5.

9. Une méthode pour préparer la nanomousse polymère de la revendication 1, la méthode comprenant :

a. le fait de mélanger en fusion de façon homogène ensemble au moins un copolymère contenant de l'acrylonitrile dépourvu de (méth)acrylique sélectionné parmi des copolymères de styrène-acrylonitrile et des copolymères d'acrylonitrile-butadiène-styrène et au moins un polymère (méth)acrylique sélectionné parmi le poly(méthacrylate de méthyle), le poly(méthacrylate d'éthyle), et des copolymères de méthacrylate de méthyle et/ou méthacrylate d'éthyle avec des monomères polaires et/ou des monomères non polaires, afin de former une phase polymère continue ;
b. le fait de mettre en contact la phase polymère continue avec un agent d'expansion comprenant au moins 50 pour cent en poids de dioxyde de carbone sur la base du poids total d'agent d'expansion à une pression d'au moins 15 mégapascals afin de former un mélange polymère moussable ;
c. le fait de réduire la pression sur le mélange polymère moussable d'au moins 10 mégapascals à une vitesse d'au moins 10 mégapascals par seconde tandis que le mélange polymère moussable est à une température d'au moins 20 degrés Celsius en dessous de la température de transition vitreuse du copolymère contenant de l'acrylonitrile dépourvu de (méth)acrylique ayant la température de transition vitreuse la plus élevée afin de permettre au mélange polymère moussable de se dilater en la mousse polymère de la revendication 1 ;

dans laquelle la quantité d'acrylonitrile copolymérisé dans la phase polymère continue est comprise dans une gamme de 3 à 28 pour cent en poids rapporté au poids total de phase polymère continue, la somme de polymères (méth)acrylique compte pour de 10 à 90 pour cent en poids du poids total de phase polymère continue, la quantité de copolymère méthacrylique est de 50 pour cent en poids ou moins du poids total de phase polymère continue, au moins un copolymère contenant de l'acrylonitrile dépourvu de (méth)acrylique a une température de transition vitreuse plus élevée que la totalité des polymères (méth)acryliques et le mélange polymère moussable est dépourvu d'additif nucléant nanométrique.

10. La méthode de la revendication 9, dans laquelle la phase polymère continue est un mélange polymère monophasé.

11. La méthode de la revendication 9, dans laquelle le mélange polymère moussable contient au moins 10 pour cent en poids de dioxyde de carbone relativement au poids total de mélange polymère moussable.

12. La méthode de la revendication 9, dans laquelle la vitesse de chute de pression à l'étape (c) est comprise dans une gamme de 100 mégapascals par seconde à trois gigapascals par seconde.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011112352 A